# EUROPEAN PATENT SPECIFICATION

(11) **EP 0 839 888 B1**
(45) Date of publication and mention of the grant of the patent: **27.12.2000**
(21) Application number: 97308741.4
(22) Date of filing: 31.10.1997
(51) Int. Cl.: C09J 101/26, C09J 103/00, C09J 105/00, C09J 103/04

(54) **Liquid adhesive concentrate**
Flüssiges Klebstoff-Konzentrat
Adhésif liquide concentré

(30) Priority: 01.11.1996 GB 9622823
(43) Date of publication of application: 06.05.1998
(73) Proprietor: POLYCELL PRODUCTS LIMITED, London SW1P 3JF (GB)
(72) Inventor: Charnock, Ronald Scott, Blunham, Bedfordshire MK44 3ND (GB); Deamer, Derrick Frederick, Stevenage, Hertfordshire SG1 4DZ (GB); Harris, Antony John, Hatfield, Hertfordshire AL10 8HA (GB); Holloway, James Duncan, Tring, Hertfordshire HP23 5PG (GB)
(74) Representative: Baldock, Sharon Claire

(56) References cited:
- EP-A- 0 016 640
- WO-A-96/13559
- US-A- 4 866 018
- PATENT ABSTRACTS OF JAPAN vol. 6, no. 90 (C-104), 27 May 1982 & JP 57 021467 A (DANBERU), 4 February 1982 & DATABASE WPI Week 8225 Derwent Publications Ltd., London, GB; AN 20515E
- CHEMICAL ABSTRACTS, vol. 101, no. 22, 26 November 1984 Columbus, Ohio, US; abstract no. 194060s, page 110; XP002073657 & BR 8 206 854 A (SARAIVA, RAMIRA DE ALMEIDA)
- PATENT ABSTRACTS OF JAPAN vol. 18, no. 328 (C-1215), 22 June 1994 & JP 06 073353 A (NIPPON PAPER IND CO LTD), 15 March 1994 & DATABASE WPI Week 9415 Derwent Publications Ltd., London, GB; AN 124247

## Description

The present invention relates to a liquid adhesive concentrate composition and, in particular, to a liquid adhesive concentrate composition for hanging wall coverings or as a paper, cardboard or paperboard adhesive.

Known adhesives for hanging wall coverings have been mainly based on solid compositions of flake starch ether or powdered methyl cellulose or blends of these materials. These products are sold in dried solid form which require mixing with water before use. These solid products are associated with difficulties in preparation of the adhesive often resulting in lumps of undissolved powder. It is also necessary to stand the prepared paste for some time in order to effect complete dissolution of the flake or powder composition and for the full adhesive properties of the paste to develop.

A base for an adhesive composition which obviates the need to mix solid material with water can be obtained by dispersing methyl cellulose in an appropriate solvent. The stability of such compositions tends, however, to be poor and they readily separate out into their liquid and solid phases. Furthermore, it is difficult to redisperse such compositions by shaking. It is also very difficult to control the viscosity and pourability without unduly affecting the stability. The present inventors have now developed a new adhesive composition which addresses these problems and which possesses adhesion properties to match conventional products.

EP-A-0 016640 relates to high concentration polymer slurries for use in oil field applications.

WO-A-96/13559 relates to a two-pack adhesive composition and a method of manufacture of an adhesive composition therefrom.

Accordingly, the present invention provides a stabilised liquid adhesive concentrate composition comprising a water soluble polymer dispersed in an emulsifiable or a water miscible substantially nonaqueous solvent, a silicate-based rheology modifier and a surfactant.

Preferably the water soluble polymer is selected from cellulose or starch ethers, natural gums, or synthetic water soluble polymers. Examples include methyl cellulose, ethyl cellulose, hydroxypropyl methyl cellulose, carboxymethyl cellulose, ethylhydroxyethyl cellulose, methyl hydroxyethyl cellulose, hydroxyethyl cellulose, starch or a derivative thereof, natural gum such as guar gum or xanthan gum, or a mixture of two or more thereof. Advantageously these materials have a viscosity in the range of from about 30 to 150,000 mPas, preferably from about 1,000 to 100,000 mPas, for a 2% solution in water at 20°C.

The water soluble polymer is preferably provided in the form of particles substantially all of which have a size of ≤ about 180µm, more preferably ≤ about 110µm, still more preferably ≤ about 50µm, resulting in particularly favourable dispersion characteristics.

The liquid adhesive concentrate comprises a dispersion of the water soluble polymer in a solvent medium, which is preferably of a high purity. The solvent is preferably one which does not, in itself, cause significant thickening of the water soluble polymer, and suitable examples are non-polar and weakly polar organic solvents. Examples include hydrocarbons, glycol ethers (such as ethylene and propylene glycol ethers) and their esters, including combinations of two or more thereof. The solvent is preferably present in the composition in an amount of from 20 to 80 wt.%, more preferably 35 to 65 wt.%.

The ratio of the water soluble polymer to the solvent is preferably in the range of from 3:7 to 5:4.

The rheology modifier preferably comprises a clay mineral, an organic derivative thereof or a combination thereof. Examples of suitable clay minerals include kaolinite, halloysite, illite, montmorillonite, bentonite, vermiculite, atapulgite and saponite. The rheology modifier may further comprise mica and/or quartz and may also optionally include a dispersant or an aliphatic amine. Advantageously, the rheology modifier comprises powdered china clay, smectite clay or a combination thereof, including organic derivatives thereof. The rheology modifier is preferably present in the composition in an amount of at least 0.1 wt.%., preferably from 1 to 7 wt.%.

The surfactant is preferably of the nonionic type and advantageously comprises an alcohol ethoxylate, a nonyl phenol ethoxylate, a sulphosuccinate, or a mixture of two or more thereof. More preferably the surfactant comprises a primary fatty alcohol ethoxylate. The fatty alcohol is preferably a synthetic middle fraction primary alcohol. The surfactant typically has an ethylene oxide content in the range of from 25 to 75 % and is preferably present in the composition in an amount of from 2 to 10 wt.%. The use of an anhydrous surfactant, preferably an anhydrous alcohol ethoxylate, results in an adhesive composition having particularly favourable stability and dispersion characteristics.

The liquid adhesive concentrate composition may further comprise one or more components selected from solubility-delaying agents, biocides, binders, plasticisers, anti-settling agents, pH modifiers, cross-linking agents, adhesion promoters and tackifying resins. A preferred solubility-delaying agent is glyoxal, which is advantageously provided as a coating on the water soluble polymer. A preferred binder comprises a polyvinyl acetate homopolymer or copolymer redispersible polymer.

Suitable pH modifiers include sodium carbonate and 2-Amino-2-Methyl-1-propanol.

The present invention provides an adhesive in the form of a concentrate, which thickens on mixing with water. The liquid concentrate has convenient mixing properties, which enables rapid mixing to give a smooth adhesive, with good stability and performance at least equal to currently available systems. Even if a small degree of separation occurs, the present invention enables the solid constituents of the liquid concentrate to be redispersed with relative ease by manual shaking.

Preferably the liquid concentrate composition is mixed with water. The variable selection of the liquid concentrate percentage enables easy adjustment of viscosity. Furthermore, additional concentrate (or water) can be added to adjust the viscosity at any desired stage of mixing. This has previously not been possible with conventional powdered products.

When the liquid adhesive concentrate composition according to the present invention is mixed with water a stable adhesive paste results, which preferably has a viscosity (at 20°C) in the range of from 0.5 to 30 Pas.

The preferred method of making the adhesive from the concentrate, comprises adding the concentrate to water whilst stirring. However, it is also possible to add the water to the concentrate, whilst stirring.

During preparation of the adhesive, from the liquid concentrate, the paste thickens without any risk of lump formation. The viscosity of the final paste can be easily adjusted by addition of further concentrate (to thicken) or further water (to thin).

The present invention further provides a two-pack adhesive composition comprising, in a first pack, a water-continuous polymer emulsion and, in a second pack, a liquid adhesive concentrate composition as herein described. The primary purpose of the composition provided in the first pack is to augment the final adhesive properties of the composition in the second pack. The water-continuous polymer emulsion preferably comprises an acrylic copolymer, an acrylated vinyl acetate based copolymer, a polyvinyl acetate homopolymer, a terpolymer of vinyl acetate, acrylic ester and the vinyl ester of a long chain branched organic acid or a copolymer of vinyl acetate and butyl acrylate. The water-continuous polymer emulsion pack may further comprise one or more components selected from biocides, plasticisers, tackifying resins, adhesion promoters (including additional powdered polymers, such as redispersable polymers), surfactants and pH modifiers.

The two-pack adhesive composition is preferably provided in a concentrated form such that before use either the first pack or the second pack is added to water or both packs are added to water. Alternatively, the two-pack adhesive composition may be provided for combining together to form a single adhesive composition.

The present invention also provides a method of making an adhesive composition comprising mixing at a hand mixing rate a water-continuous polymer emulsion as herein described and a liquid adhesive concentrate composition as herein described until a paste is formed. The water-continuous polymer emulsion and the liquid adhesive concentrate composition may be added simultaneously to water with mixing or, alternatively, the water-continuous polymer emulsion may first be mixed with water before mixing with the liquid adhesive concentrate composition or vice versa.

Preferably the adhesive composition in this aspect of the invention comprises in the range of from about 1 to about 25 wt.% of the water-continuous polymer emulsion, from about 1 to about 25 wt.% of the liquid adhesive concentrate composition and the balance of water. The present invention also has within its scope an adhesive composition prepared from the two-pack composition as herein described. In this aspect, the composition preferably comprises from 1 to 20 wt.% of the water-continuous polymer emulsion, from 1 to 20 wt.% of the liquid adhesive concentrate composition and the balance of water.

The present invention also has within its scope the use of an adhesive composition as herein described for hanging wall coverings or as a paper, cardboard or paperboard adhesive. The adhesive composition is suitable as an adhesive for a range of weights of wallpaper. It possesses high adhesion qualities to all common building surfaces.

The present invention will now be described further with reference to the following examples, in which: Examples 1 to 19 relate to a liquid adhesive concentrate composition according to the present invention (Examples 2 and 3 are control examples and do not fall within the scope of the invention); and Examples A to K relate to a water-continuous polymer emulsion for use in the first pack of the two-pack adhesive composition according to the present invention.

Table 1 sets out the various constituents of the compositions in respect of Examples 1 to 19.

Table 2 provides a summary of dispersion characteristics in respect of Examples 1 to 19.

Table 3 sets out the various constituents of the compositions in respect of Examples A to K.

Table 4 provides details of solution characteristics, i.e. viscosity and adhesion, for combinations of certain of Examples 1 to 19 with certain of Examples A to K.

The liquid adhesive concentrate composition for each of Examples 1 to 19 was prepared in the following manner. All of the powdered ingredients were weighed out into a glass jar and the jar was then sealed and shaken to ensure a thorough mix. Next, the liquid ingredients were weighed into the jar and the jar was then again sealed and shaken. The resulting dispersion was then mixed on a Silverson L4RT laboratory high shear mixer @ 6000 RPM for 3 minutes. The dispersion characteristics of the compositions were then assessed after up to 28 days and the results are given in Table 2. All of the examples, apart from the control examples, showed little separation of the solid and liquid phases and could be redispersed with ease by manual shaking for about 30 seconds.

The water-continuous polymer emulsion composition for each of Examples A to K was prepared in the following manner. All of the liquid ingredients were weighed out into a glass jar and the jar was then sealed and shaken to ensure a thorough mix. The resulting emulsion was then mixed on a Silverson L4RT laboratory high shear mixer @ 6000 RPM for 3 minutes.

Two-pack adhesive compositions according to the present invention were prepared by mixing certain of the compositions of Examples 1 to 19 with certain of those of Examples A to K and water by the following method. First, 180 g of water was weighed out into a 400 ml container. 10 g of the water-continuous polymer emulsion composition was then weighed out into the water. The resulting mixture was then transferred to a Haake VT500/FL100 spindle @ 20S⁻¹. As soon as the spindle started to turn, 10 g of liquid adhesive concentrate was added to the said mixture. The viscosity development was automatically recorded and the results are given in Table 4. Adhesion tests were carried out using a standard 180° peel test using a roller blind fabric on an emulsion painted substrate. If, however, the dispersion contains a pH modifier (e.g. Examples 18 and 19), it can be used as a one-pack adhesive composition.

The two-pack adhesive composition prepared by mixing the composition of Example 10 with the composition of Examples A and water was used to hang a wood-chip wallpaper onto bare plaster. The adhesive was easy to brush out, had good wet tack and slip properties and adhesion properties meeting the current British Standard for wall covering adhesives BS3046 1981 (1991).

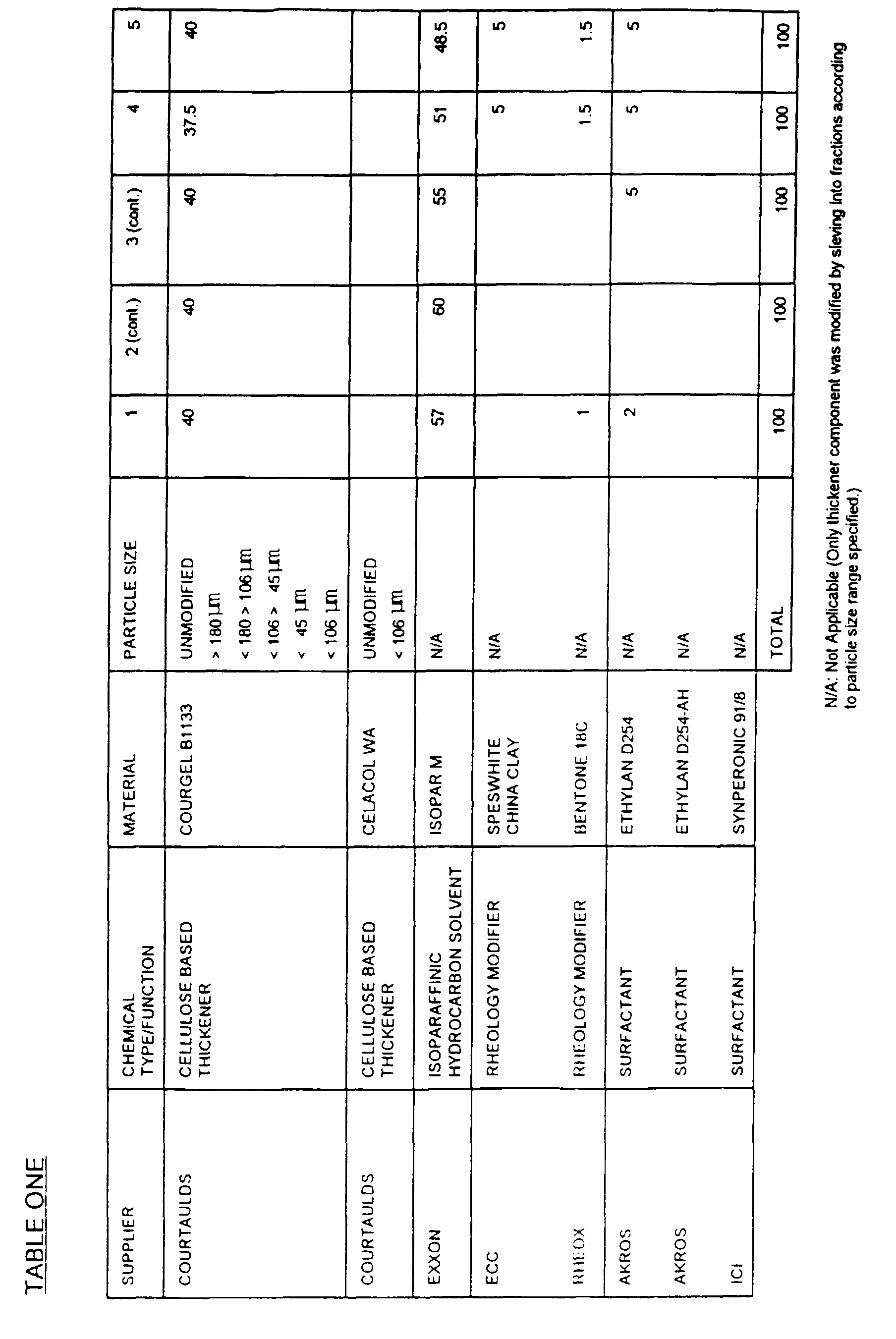

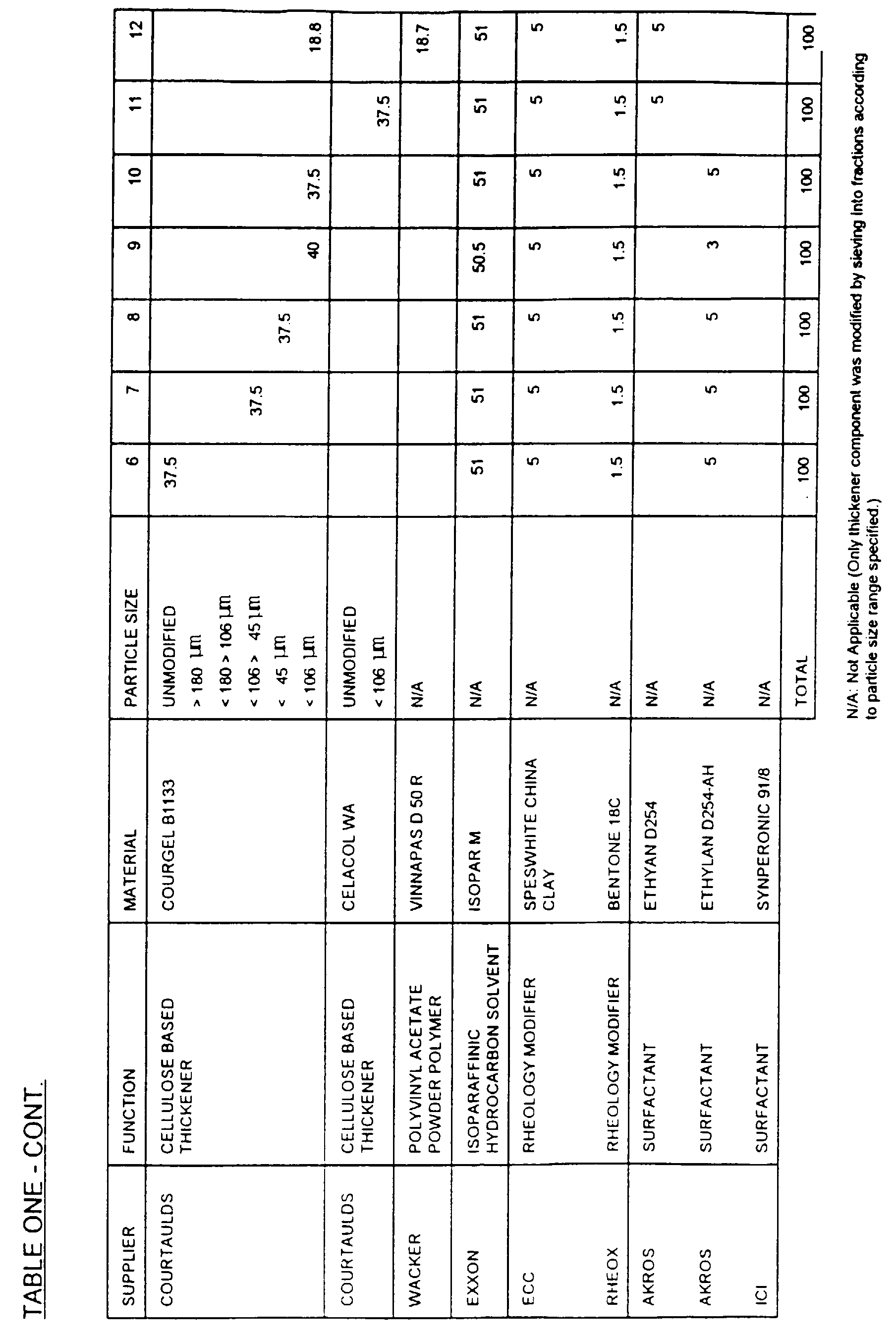

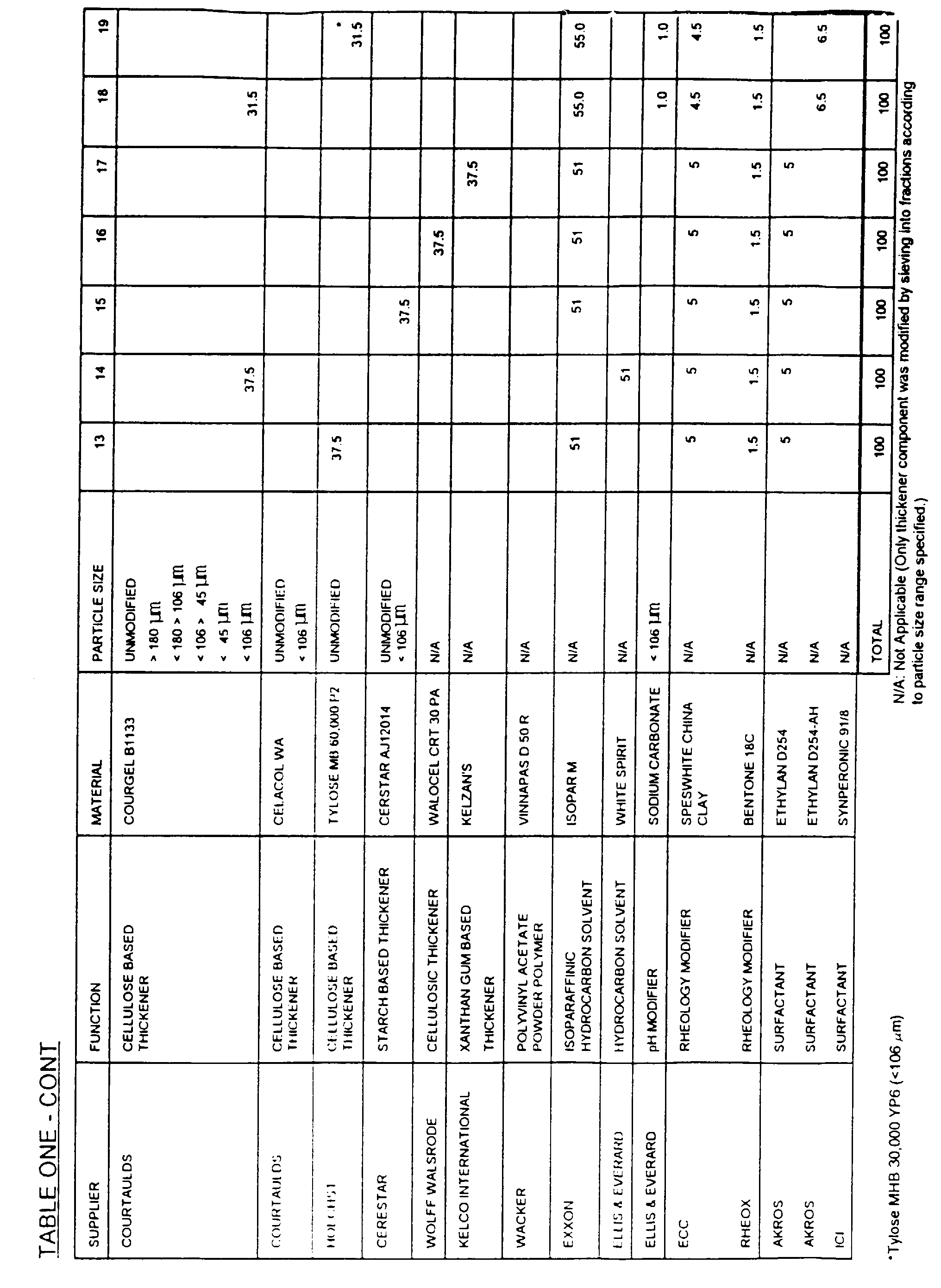

### SUMMARY OF DISPERSION CHARACTERISTICS

**TABLE 2**

| No. | Dispersion Characteristics |
|---|---|
| 1 | Off white mobile dispersion, with little separation. Quite thick. Very easy to redisperse |
| 2 (CONTROL) | Approx. 25% Clear liquid separated. Easy to redisperse |
| 3 (CONTROL) | Approx. 25% Clear liquid separated. Easy to redisperse |
| 4 | Off white mobile dispersion, with little separation. Very easy to redisperse |
| 5 | Off white dispersion - No separation but is viscous. |
| 6 | Off white mobile dispersion, with little separation. Very easy to redisperse |
| 7 | Off white mobile dispersion, with little separation. Very easy to redisperse |
| 8 | Off white mobile dispersion, with little separation. Very easy to redisperse |
| 9 | Off white mobile dispersion, with little separation. Quite thick. Very easy to redisperse |
| 10 | Very mobile dispersion with little separation. Very easy to redisperse |
| 11 | Off white mobile dispersion, with little separation. Very easy to redisperse |
| 12 | Off white mobile dispersion, with little separation. Very easy to redisperse |
| 13 | Off white dispersion, viscous. |
| 14 | Off white dispersion, viscous. |
| 15 | Off white mobile dispersion, with little separation. Very easy to redisperse |
| 16 | Off white mobile dispersion, with little separation. Very easy to redisperse |
| 17 | Off white mobile dispersion, with little separation. Very easy to redisperse |
| 18 | Off white mobile dispersion, with little separation. Very easy to redisperse |
| 19 | Off white mobile dispersion, with little separation. Very easy to redisperse |

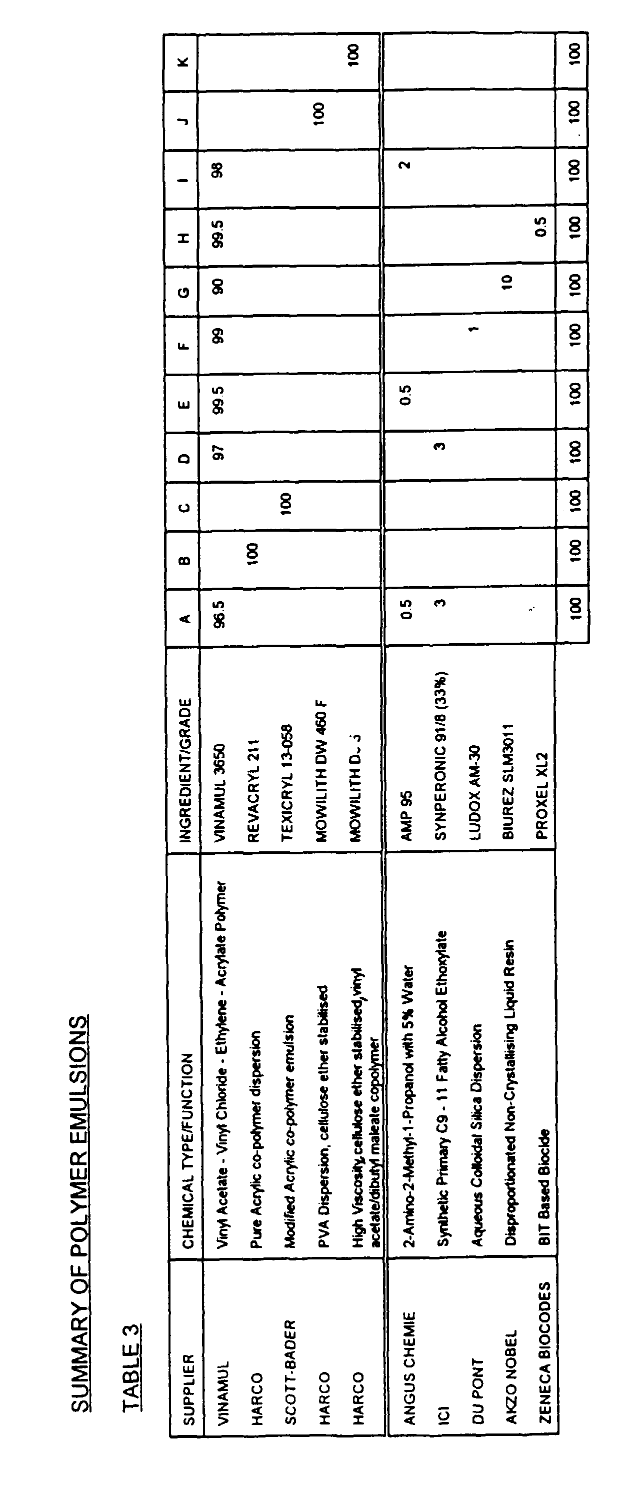

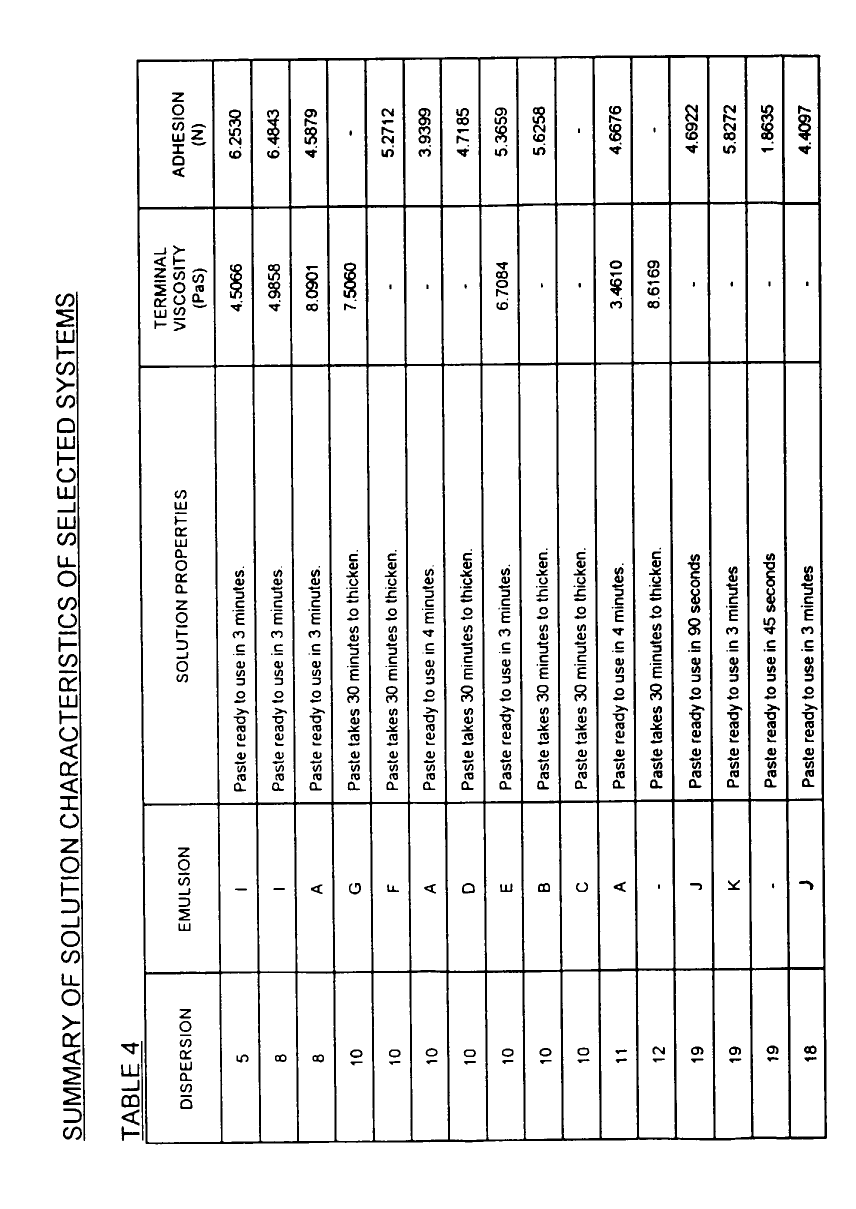

## Claims

1. A liquid adhesive concentrate composition comprising a water soluble polymer dispersed in a water miscible or emulsifiable substantially nonaqueous solvent, a silicate-based rheology modifier and a surfactant.

2. A liquid adhesive concentrate composition as claimed in claim 1, wherein the water soluble polymer comprises methyl cellulose, ethyl cellulose, hydroxypropyl methyl cellulose, carboxymethyl cellulose, ethylhydroxyethyl cellulose, methyl hydroxyethyl cellulose, hydroxyethyl cellulose, starch or a derivative thereof, natural gum or a mixture of two or more thereof.

3. A liquid adhesive concentrate composition as claimed in claim 1 or claim 2, wherein the water soluble polymer is provided as particles substantially all of which have a size of ≤ 180µm.

4. A liquid adhesive concentrate composition as claimed in any one of the preceding claims, wherein the solvent comprises a hydrocarbon, a glycol ether or an ester thereof, or a mixture of two or more thereof.

5. A liquid adhesive concentrate composition as claimed in any one of the preceding claims, wherein the ratio of the water soluble polymer to the solvent is from 3:7 to 5:4.

6. A liquid adhesive concentrate composition as claimed in any one of the preceding claims, wherein the rheology modifier comprises a clay mineral, an organic derivative thereof or a combination thereof, and optionally mica and/or quartz.

7. A liquid adhesive concentrate composition as claimed in any one of the preceding claims, wherein the rheology modifier comprises powdered china clay, smectite clay or a combination thereof, including organic derivatives thereof.

8. A liquid adhesive concentrate composition as claimed in any one of the preceding claims comprising at least 0.1 wt.% of the rheology modifier.

9. A liquid adhesive concentrate composition as claimed in any one of the preceding claims, wherein the surfactant is of the nonionic type.

10. A liquid adhesive concentrate composition as claimed in any one of the preceding claims, wherein the surfactant comprises an alcohol ethoxylate, a nonyl phenol ethoxylate, a sulphosuccinate, or a mixture of two or more thereof.

11. A liquid adhesive concentrate composition as claimed in any one of the preceding claims comprising from 2 to 10 wt.% of the surfactant.

12. A liquid adhesive concentrate composition as claimed in any one of the preceding claims, further comprising one or more components selected from solubility-delaying agents, biocides, binders, plasticisers, anti-settling agents, pH modifiers and cross-linking agents.

13. An adhesive paste composition comprising a liquid adhesive concentrate as claimed in any one of the preceding claims and water.

14. A two-pack adhesive composition comprising, in a first pack a water-continuous polymer emulsion and in a second pack a liquid adhesive concentrate composition as claimed in any one of claims 1 to 12.

15. A two-pack adhesive composition as claimed in claim 14,which is in concentrated form such that before use either the first pack or the second pack is added to water or both packs are added to water.

16. A two-pack adhesive composition as claimed in claim 14 or claim 15, wherein the water-continuous polymer emulsion comprises an acrylic copolymer, an acrylated vinyl acetate based copolymer, a polyvinyl acetate homopolymer, a terpolymer of vinyl acetate, acrylic ester and the vinyl ester of a long chain branched organic acid or a copolymer of vinyl acetate and butyl acrylate, and optionally one or more components selected from biocides, plasticisers, tackifying resins, adhesion promoters, surfactants and pH modifiers.

17. A method of making an adhesive composition comprising mixing at a hand mixing rate a water-continuous polymer emulsion and a liquid adhesive concentrate composition as claimed in any one of claims 1 to 12 until a thick paste is formed.

18. A method of making an adhesive composition as claimed in claim 17, wherein the water-continuous polymer emulsion comprises an acrylic copolymer, an acrylated vinyl acetate based copolymer, a polyvinyl acetate homopolymer, a terpolymer of vinyl acetate, acrylic ester and the vinyl ester of a long chain branched organic acid or a copolymer of vinyl acetate and butyl acrylate.

19. A method as claimed in claim 17 or claim 18, wherein the water-continuous polymer emulsion and the liquid adhesive concentrate composition are added simultaneously to water with mixing, or the water-continuous polymer emulsion is first mixed with water before mixing with the liquid adhesive concentrate composition.

20. A method as claimed in claim 19, wherein the adhesive composition comprises from 1-25 wt.% of the water-continuous polymer emulsion, from 1-25 wt.% of the liquid adhesive concentrate composition and the balance of water.

21. An adhesive composition prepared from the two-pack composition as claimed in any one of claims 14 to 16.

22. An adhesive composition as claimed in claim 21 and comprising from 1 to 20 wt.% of the water-continuous polymer emulsion, from 1 to 20 wt.% of the liquid adhesive concentrate composition and the balance of water.

23. Use of an adhesive paste composition as claimed in claim 13 or an adhesive composition as claimed in claim 21 or claim 22 for hanging wall coverings or as a paper, cardboard or paperboard adhesive.

## Patentansprüche

1. Flüssige Klebstoffkonzentratzusammensetzung, umfassend ein wasserlösliches Polymer dispergiert in einem Wasser-mischbaren oder emulgierbaren, im wesentlichen nicht-wäßrigen Lösungsmittel, einen Viskositätsveränderer auf Silikatbasis und ein oberflächenaktives Mittel.

2. Flüssige Klebstoffkonzentratzusammensetzung nach Anspruch 1, worin das wasserlösliche Polymer Methylcellulose, Ethylcellulose, Hydroxypropylmethylcellulose, Carboxymethylcellulose, Ethylhydroxyethylcellulose, Methylhydroxyethylcellulose, Hydroxyetyhelcellulose, Stärke oder ein Derivat davon, natürlichen Gummi oder ein Gemisch von zwei oder mehreren davon umfaßt.

3. Flüssige Klebstoffkonzentratzusammensetzung nach Anspruch 1 oder 2, worin das wasserlösliche Polymer als Teilchen bereitgestellt wird, die im wesentlichen alle eine Größe von ≤ 180 µm aufweisen.

4. Flüssige Klebstoffkonzentratzusammensetzung nach einem der vorhergehenden Ansprüche, worin das Lösungsmittel einen Kohlenwasserstoff, einen Glykolether oder einen Ester davon oder ein Gemisch von zwei oder mehreren davon umfaßt.

5. Flüssige Klebstoffkonzentratzusammensetzung nach einem der vorhergehenden Ansprüch, worin das Verhältnis des wasserlöslichen Polymers zum Lösungsmittel von 3:7 bis 5:4 beträgt.

6. Flüssige Klebstoffkonzentratzusammensetzung nach einem der vorhergehenden Ansprüche, worin der Viskositätsveränderer ein Tonmineral, ein organisches Derivat davon oder eine Kombination davon und gegebenenfalls Glimmer und/oder Quarz umfaßt.

7. Flüssige Klebstoffkonzentratzusammensetzung nach einem der vorhergehenden Ansprüche, worin der Viskositätsveränderer pulverförmigen Kaolin, Smectitton oder eine Kombination davon, einschließlich organische Derivate davon umfaßt.

8. Flüssige Klebstoffkonzentratzusammensetzung nach einem der vorhergehenden Ansprüche, umfassend mindestens 0,1 Gew.-% des Viskositätsveränderers.

9. Flüssige Klebstoffkonzentratzusammensetzung nach einem der vorhergehenden Ansprüche, worin das oberflächenaktive Mittel vom nicht-ionischen Typ ist.

10. Flüssige Klebstoffkonzentratzusammensetzung nach einem der vorhergehenden Ansprüche, worin das oberflächenaktive Mittel ein Alkoholethoxylat, ein Nonylphenolethoxylat, ein Sulfosuccinat oder ein Gemisch von zwei oder mehreren davon umfaßt.

11. Flüssige Klebstoffkonzentratzusammensetzung nach einem der vorhergehenden Ansprüche, umfassen von 2 bis 10 Gew.-% des oberflächenaktiven Mittels.

12. Flüssige Klebstoffkonzentratzusammensetzung nach einem der vorhergehenden Ansprüche, weiterhin umfassend ein oder mehrere Bestandteile, ausgewählt aus Solubilitäts-verzögernden Mitteln, Bioziden, Bindemitteln, Weichmachern, Anti-Setzmitteln, pH-Modifiziermitteln und Quervernetzungsmitteln.

13. Klebstoffpastenzusammensetzung, umfassend ein flüssiges Klebstoffkonzentrat nach einem der vorhergehenden Ansprüche und Wasser.

14. Zweikomponenten-Klebstoffstoffzusammensetzung, umfassend als erste Komponente eine Wasser-kontinuierliche Polymeremulsion und als zweite Komponente eine flüssige Klebstoffkonzentratzusammensetzung nach einem der Ansprüche 1 bis 12.

15. Zweikomponenten-Klebstoffzusammensetzung nach Anspruch 14, welche in konzentrierter Form vorliegt, so daß vor der Verwendung entweder die erste Komponente oder die zweite Komponente zu Wasser zugegeben wird oder beide Komponenten zu Wasser zugegeben werden.

16. Zweikomponenten-Klebstoffzusammensetzung nach Anspruch 14 oder 15, worin die Wasser-kontinuierliche Polymeremulsion ein Acrylcopolymer, ein acryliertes Copolymer auf Vinylacetatbasis, ein Polyvinylacetathomopolymer, ein Terpolymer aus Vinylacetat, Acrylester und dem Vinylester einer verzweigten langkettigen organischen Säure oder ein Copolymer von Vinylacetat und Butylacrylat und gegebenenfalls ein oder mehrere Komponenten, ausgewählt aus Bioziden, Weichmachern, klebrig machenden Harzen, Adhäsionspromotoren, oberflächenaktiven Mitteln und pH-Modifiziermitteln umfaßt.

17. Verfahren zur Bildung einer Klebstoffzusammensetzung, umfassend das Vermischen einer Wasser-kontinuierlichen Polymeremulsion und einer flüssigen Klebstoffkonzentratzusammensetzung nach einem der Ansprüche 1 bis 12 bei einer Handmischgeschwindigkeit, bis eine dicke Paste gebildet ist.

18. Verfahren zur Bildung einer Klebstoffzusammensetzung nach Anspruch 17, worin die Wasser-kontinuierliche Polymeremulsion ein Acrylcopolymer, ein acryliertes Copolymer auf Vinylacetatbasis, ein Polyvinylacetathomopolymer, ein Terpolymer aus Vinylacetat, Acrylester und dem Vinylester einer verzweigten langkettigen organischen Säure oder ein Copolymer von Vinylacetat und Butylacrylat umfaßt.

19. Verfahren nach Anspruch 17 oder 18, worin die Wasser-kontinuierliche Polymeremulsion und die flüssige Klebstoffkonzentratzusammensetzung gleichzeitig zum Wasser unter Mischen zugegeben werden oder die Wasser-kontinuierliche Polymeremulsion zuerst mit Wasser gemischt wird, bevor sie mit der flüssigen Klebstoffkonzentratzusammensetzung gemischt wird.

20. Verfahren nach Anspruch 19, worin die Klebstoffzusammensetzung von 1 bis 25 Gew.-% der Wasser-kontinuierlichen Polymeremulsion, von 1 bis 25 Gew.-% der flüssigen Klebstoffkonzentratzusammensetzung und als Rest Wasser umfaßt.

21. Klebstoffzusammensetzung, hergestellt aus der Zweikomponentenzusammensetzung nach einem der Ansprüche 14 bis 16.

22. Klebstoffzusammensetzung nach Anspruch 21, umfassend von 1 bis 20 Gew.-% der Wasser-kontinuierlichen Polymeremulsion, von 1 bis 20 Gew.-% der flüssigen Klebstoffkonzentratzusammensetzung und als Rest Wasser.

23. Verwendung einer Klebstoffpastenzusammensetzung nach Anspruch 13 oder einer Klebstoffzusammensetzung nach Anspruch 21 oder 22 zum Befestigen von Tapeten an der Wand oder als Papier-, Karton- oder Pappeklebstoff.

## Revendications

1. Composition de concentré d'adhésif liquide, comprenant un polymère hydrosoluble dispersé dans un solvant substantiellement non-aqueux, miscible à l'eau ou émulsionnable dans l'eau, un modificateur de rhéologie à base d'un silicate et un surfactant.

2. Composition de concentré d'adhésif liquide suivant la revendication 1, dans laquelle le polymère hydrosoluble comprend la méthylcellulose, l'éthylcellulose, l'hydroxypropylméthylcellulose, la carboxyméthylcellulose, l'éthylhydroxyéthylcellulose, la méthylhydroxyéthylcellulose, l'hydroxyéthylcellulose, l'amidon ou un de ses dérivés, une gomme naturelle ou un mélange de deux ou plus de deux de ces polymères.

3. Composition de concentré d'adhésif liquide suivant la revendication 1 ou la revendication 2, dans laquelle le polymère hydrosoluble est fourni sous forme de particules ayant pratiquement toutes un diamètre ≤ à 180 µm.

4. Composition de concentré d'adhésif liquide suivant l'une quelconque des revendications précédentes, dans laquelle le solvant comprend un hydrocarbure, un éther de glycol ou un de ses esters, ou bien un mélange de deux ou plus de deux de ces composés.

5. Composition de concentré d'adhésif liquide suivant l'une quelconque des revendications précédentes, dans laquelle le rapport du polymère hydrosoluble au solvant est compris dans l'intervalle de 3:7 à 5:4.

6. Composition de concentré d'adhésif liquide suivant l'une quelconque des revendications précédentes, dans laquelle le modificateur de rhéologie comprend une substance minérale argileuse, un de ses dérivés organiques ou une de leurs associations, et, facultativement, du mica et/ou du quartz.

7. Composition de concentré d'adhésif liquide suivant l'une quelconque des revendications précédentes, dans laquelle le modificateur de rhéologie comprend de la terre à porcelaine pulvérisée, une argile de type smectique ou une de leurs associations, y compris leurs dérivés organiques.

8. Composition de concentré d'adhésif liquide suivant l'une quelconque des revendications précédentes, comprenant au moins 0,1 % en poids du modificateur de rhéologie.

9. Composition de concentré d'adhésif liquide suivant l'une quelconque des revendications précédentes, dans laquelle le surfactant est de type non-ionique.

10. Composition de concentré d'adhésif liquide suivant l'une quelconque des revendications précédentes, dans laquelle le surfactant comprend un produit d'éthoxylation d'un alcool, un produit d'éthoxylation de nonylphénol, un sulfosuccinate ou un mélange de deux ou plus de deux d'entre eux.

11. Composition de concentré d'adhésif liquide suivant l'une quelconque des revendications précédentes, comprenant 2 à 10 % en poids du surfactant.

12. Composition de concentré d'adhésif liquide suivant l'une quelconque des revendications précédentes, comprenant en outre un ou plusieurs constituants choisis entre des agents retardant la solubilité, des biocides, des liants, des plastifiants, des agents inhibant la sédimentation, des modificateurs de pH et des agents de réticulation.

13. Composition de pâte adhésive comprenant un concentré d'adhésif liquide suivant l'une quelconque des revendications précédentes et de l'eau.

14. Composition d'adhésif à deux composants comprenant, dans un premier composant, une émulsion de polymère à phase aqueuse continue, et, dans un second composant, une composition de concentré d'adhésif liquide suivant l'une quelconque des revendications 1 à 12.

15. Composition d'adhésif à deux composants suivant la revendication 14, qui est sous forme concentrée de telle sorte que, avant utilisation, le premier composant ou le second composant soit ajouté à de l'eau ou bien les deux composants soient ajoutés à de l'eau.

16. Composition d'adhésif à deux composants suivant la revendication 14 ou la revendication 15, dans laquelle l'émulsion de polymère à phase aqueuse continue comprend un copolymère acrylique, un copolymère à base d'acétate de vinyle acrylaté, un homopolymère d'acétate de vinyle, un terpolymère d'acétate de vinyle, un ester acrylique et l'ester vinylique d'un acide organique ramifié à chaîne longue ou un copolymère d'acétate de vinyle et d'acrylate de butyle, et, facultativement, un ou plusieurs constituants choisis entre des biocides, des plastifiants, des résines d'adhésivité, des activateurs d'adhérence, des surfactants et des modificateurs de pH.

17. Procédé pour la préparation d'une composition d'adhésif, comprenant le mélange à une vitesse de mélange manuel d'une émulsion de polymère à phase aqueuse continue et d'une composition de concentré d'adhésif liquide suivant l'une quelconque des revendications 1 à 12 jusqu'à la formation d'une pâte épaisse.

18. Procédé pour la préparation d'une composition d'adhésif suivant la revendication 17, dans lequel l'émulsion de polymère à phase aqueuse continue comprend un copolymère acrylique, un copolymère à base d'acétate de vinyle acrylaté, un homopolymère d'acétate de vinyle, un terpolymère d'acétate de vinyle, un ester acrylique et l'ester vinylique d'un acide organique ramifié à chaîne longue ou un copolymère d'acétate de vinyle et d'acrylate de butyle.

19. Procédé suivant la revendication 17 ou la revendication 18, dans lequel l'émulsion de polymère à phase aqueuse continue et la composition de concentré d'adhésif liquide sont ajoutées simultanément à de l'eau en mélangeant, ou bien l'émulsion de polymère à phase aqueuse aqueuse continue est tout d'abord mélangée à de l'eau avant le mélange à la composition de concentré d'adhésif liquide.

20. Procédé suivant la revendication 19, dans lequel la composition d'adhésif comprend 1 à 25 % en poids de l'émulsion de polymère à phase aqueuse continue, 1 à 25 % en poids de la composition de concentré d'adhésif liquide et le pourcentage restant d'eau.

21. Composition d'adhésif préparée à partir de la composition à deux composants suivant l'une quelconque des revendications 14 à 16.

22. Composition d'adhésif suivant la revendication 21 et comprenant 1 à 20 % en poids de l'émulsion de polymère à phase aqueuse continue, 1 à 20 % en poids de la composition de concentré d'adhésif liquide et le pourcentage restant d'eau.

23. Utilisation d'une composition de pâte adhésive suivant la revendication 13 ou d'une composition d'adhésif suivant la revendication 21 ou la revendication 22 pour les papiers tenture ou comme adhésif pour le papier, le carton compact ou le carton léger.
